# EUROPEAN PATENT SPECIFICATION

(11) **EP 0 452 354 B1**
(45) Date of publication and mention of the grant of the patent: **17.08.1994**
(21) Application number: 90900970.6
(22) Date of filing: 28.12.1989
(51) Int. Cl.: G08B 13/16

(54) **ULTRASONIC VOLUMETRIC ALARM SYSTEM**
VOLUMETRISCHES ULTRASCHALL-ALARMSYSTEM
SYSTEME D'ALARME VOLUMETRIQUE ULTRASONORE

(30) Priority: 12.01.1989 IT 1907389
(43) Date of publication of application: 23.10.1991
(73) Proprietor: BRUSA, Pietro, Varese (IT); PETTINAROLI, Rosita, I-21045 Gazzada Schianno (IT)
(72) Inventor: BRUSA, Pietro, Varese (IT); PETTINAROLI, Rosita, I-21045 Gazzada Schianno (IT)
(74) Representative: Filippi, Remo
(86) International application number: IT8900085
(87) International publication number: WO9008369

(56) References cited:
- US-A- 3 761 909
- US-A- 3 774 190
- US-A- 4 197 528
- US-A- 4 499 564
- US-A- 4 661 936

## Description

The invention concerns an alarm system to prevent the entry of intruders inside an enclosed space.

Volumetric alarm systems signal the presence of intruders inside enclosed spaces by detecting the forms of disturbance made by said intruders. Systems based on ultrasonic waves use the Doppler effect by means of which an ultrasonic signal undergoes an alteration of frequency and of amplitude when it encounters a moving object.

The signal is made to circulate in the space to be protected by means of a transmitting station and a receiving station formed of transducers that can operate a nominal frequency.

The volume to be protected becomes filled with stationary waves that form a complex tangle due to their reflection against the various surfaces within the space.

When the variations in frequency and amplitude of the return signal caused by an intruder reach the receiving station, they are amplified, filtered and used to set off the alarm.

The signal picked up by the receiving station is constituted of the reflections of the signal sent out by the transmitting station.

If therefore the signal has a fixed frequency, environmental variations due to thermal dilation or to other causes can make the system unreliable.

It may happen, especially in systems with a constant frequency, that ,due to particular circumstances,the signal picked up by the receiving station is equal to zero thus simulating an action of sabotage which in actual fact has not taken place.

To avoid this situation, therefore, the position of the receiving or transmitting station must be changed, or else the frequency of the transmitting station must be changed, while remaining within the sphere of the transducer's nominal frequency which could wary because of the tolerance of the component and the temperature change.

To pilot the transmitting transducer, the patents US-A 4 661 936 and US-A 4 499 564 adopt a frequency generated by an internal generator that corresponds to the transducer's nominal frequency without making any allowance for all the possible environmental variations referred to above.

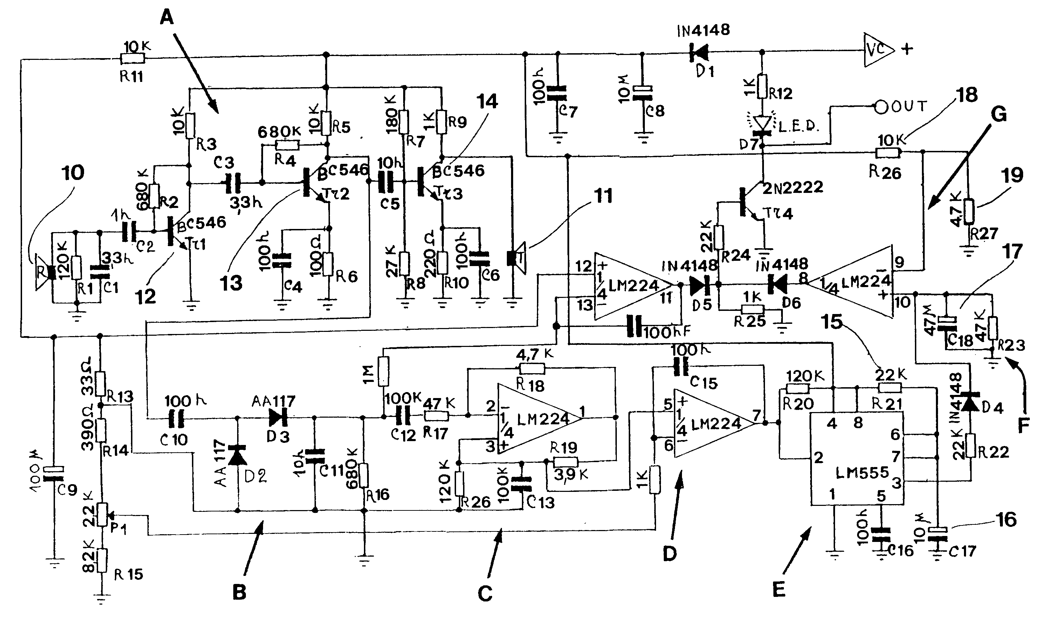

The patent US-A 4 661 936 uses a computer which, by means of a motor controls the position of the receiving station or else determines commutation of various transducers in different positions (Figs. 1, 1a, 5 and 6).

Clearly, being in a fixed position, said transducers (12, 37, 38, 39) are subject to the same faults as a simple single transducer system since in all said stations there might always be a return of a signal equal to zero in spite of their different position.

There must be a minimum of three fixed transducers and the function of signal movement is realized by phase variation among the signals of the transmitting station (fig.7) Particularly in the circuits illustrated in Fig .8 of this USA patent, serious irregularities can arise in the way they function as, on both transducers 57 and 58 a return signal equal to zero,and therefore a circuit 60, would be entirely useless since there would be no signal to verify.

The principle underlying the patent US-A-4 499 564 consists in applying to the transmitting station constant frequency pulses at a particular time (Fig. 2 c) and not optimizing said frequency, moment by moment, according to the characteristics of the transducers.

The circuit is very complex and clearly the signal (Fig. 2 d), found by analyzing the environment, is the result of all the echoes of the signal transmitted.

These echoes may have small amplitudes and it would be easy to cover them with an interference as shown in Figs. 6b, 7b and 9d. In circumstances such as those the system cuts itself out of action as seen in Fig. 7e.

The invention subject of the present application according to Claim 1 eliminates or lessens these serious drawbacks, improving reliability and dependability of the system as will be explained hereafter.

Subject of the invention is a volumetric alarm system based on ultrasonic waves in which the signal picked up by the receiving station is retransmitted in amplified form by an electronic circuit.

On returning to the receiving station, the amplified signal becomes further amplified, and so on by continuous and cyclic repetition of the phenomena and by creation of resonance.

Amplification is preferably attained in three stages.

Since, when passing through the enclosed space, the frequencies forming the signal are varyingly attenuated in relation to a prevailing frequency, resonance occurs on said prevailing frequency which is selected automatically from among the component frequencies.

If the prevailing frequency becomes attenuated by environmental variations, thermal expansion or other causes, it will be automatically replaced in the electronic circuit by another which will become the new prevailing frequency.

The signal issuing from the circuit that extracts modulation in amplitude, is filtered to eliminate unwanted signals, such as very slow or very rapid variations. Modulation of amplitude, provoked by the presence of an intruder in the enclosed space, is compared in another circuit for this purpose having a reference threshold which can be regulated by the user.

The pulse generated by the presence of an intruder determines the charge of a certain capacitor in the circuit.

A fixed reference threshold is exceeded and the alarm is set off when said capacitor is charged with at least three pulses within a restricted time.

By means of the system described above, the presence of a broad signal is assured at the receiving station irrespective of the position of the stations.

Reliability and efficiency of the system are considerably improved since practically all uncertainties and false alarms connected with the systems at present known are eliminated.

If the signal at the receiving station is zero, any simultaneous lack of resonance signal in the circuit would show that non-functioning of the signal was due to malicious causes, different therefore from accidental causes.

A description, accompanied by an electronic diagram, explains one example of execution of the invention.
- Fig. 1:: Electronic wiring of the system subject of the invention.

As shown by the symbols and connecting lines, the circuit in Fig. 1 comprises block A with three amplifiers 12, 13, 14 that amplify the signal picked up by receiving station 10.

Said amplified signal, retransmitted by the emitting station 11, returns to the receiving station 10 and is further amplified and retransmitted, repetition of said phenomena being continued ad infinitum and a phenomenon of resonance being thereby created.

As the signal,emitted by the transmitting station 11, is formed of frequencies which, when crossing the enclosed space, are subject to varying degrees of attenuation in relation to a prevailing frequency whose amplitude prevails over that of the others, the resonance of the whole system will be established on said prevailing frequency.

The signal received and progressively amplified by the receiving station 10, passes over to block B that extracts the change in amplitude of said signal in accordance with the movements made by objects within the enclosed space.

This signal is filtered in block C for elimination of any false signals such as the very slow variations due to movement of air or the very rapid ones due to disturbance on the feed line.

The signal passes from the filtering block C to block D. where it is compared to a reference which can be regulated by the user.

If said reference is exceeded, at the output of block D a zero voltage peak will occur which is passed on to mono-stable block E.

For each pulse received, said circuit E supplies a positive pulse at its output equivalent to a time pre-set by components 15 and 16.

Said pulses go to charge a capacitor 17 in block F.

In circuit G the charge value of this capacitor is compared with the fixed reference threshold determined by components 18 and 19.

If this threshold is exceeded after three pulses the alarm is set off.

Detection of possible sabotage is made by evaluating the amplitude of the signal at the output of block D. If said signal falls below the level of a pre-established reference with simultaneous lack of the phenomenon of resonance, the circuit gives the alarm.

## Claims

1. Volumetric alarm system based on ultrasonic waves for signalling the presence of intruders inside an enclosed space comprising a transmitting station (11) and a receiving station (10)
characterized in that the system comprises a circuit (A) for amplifying the signal picked up by the receiving station (10) by means of which circuit (A) said signal is retransmitted by the transmitting station (11) after amplification and, returning to the receiving station (10), is retransmitted after further amplification and so on, the phenomena being continuously and cyclicly repeated so that, as the signal in crossing the enclosed space undergoes varying attenuations of the various component frequencies in relation to a prevailing frequency, resonance of the whole system is created on said prevailing frequency, selection of the component frequencies being automatic, said prevailing frequency being automatically replaced by another frequency if, due to environmental variations caused by thermal expansion or by other factors, the first prevailing frequency becomes attenuated, the apparatus comprising a circuit (B) that notes the amplitude modulation of the signal, picked up by the receiving station (10) caused by movement of bodies within the enclosed space and a circuit able to compare said amplitude modulation of the signal with a reference threshold, adjustable by the user, and to bring the alarm into action when said signal exceeds the value of said reference threshold and also when lack of resonance occurs indicating the presence of an extraneous cause.

2. Alarm system as in claim 1,
characterized in that the signal-amplifying circuit (A) comprises three circuits (12) (13) (14) for amplification in three stages.

3. Alarm system as in claim 1,
characterized in that it comprises a circuit for signal filtering corresponding to the amplitude modulation, for eliminating useless signals, such as very slow or very quick variations.

4. Alarm system as in claim 1;
characterized in that the amplitude modulation caused by the presence of an intruder puts into effect a positive pulse equivalent to a time previously set by certain components (15) and (16), said pulse charging a capacitor (17) comprised in a special circuit (F), the charge value of said capacitor being compared in another special circuit (G) comprising a fixed reference threshold consisting of certain components (18) and (19), the alarm being set off if said threshold is exceeded following a certain number of pulses, especially three.

## Patentansprüche

1. Volumetrisches Ultraschall-Alarmgerät, das die Anwesenheit von Eindringlingen in geschlossenen Räumen meldet und einen Sender (11) und einen Empfänger (10) umfasst, und dadurch gekennzeichnet ist, dass es einen Verstärkerschaltkreis (A) des vom Empfänger (10) stammenden Signals enthält, infolge dessen dieses Signal verstärkt wieder an den Sender (11) übertragen wird und bei seiner Rückkehr an den Empfänger (10) weiter verstärkt erneut gesendet wird, und so weiter, in einer ständigen, zyklischen Wiederholung der Phänomene, wodurch infolge der Tatsache, dass das Signal bei seinem Durchlauf durch den geschlossenen Raum unterschiedlichen Abschwächungen der einzelnen Frequenzen im Verhältnis zu einer dominierenden Frequenz unterworfen wird, eine Resonanz des gesamten Systems auf dieser dominierenden Frequenz bei automatischer Wahl im Verhältnis zu den es zusammensetzenden Frequenzen entsteht, und diese dominierende Frequenz automatisch durch eine andere Frequenz ersetzt wird, sollte die erste infolge von durch Wärmeausdehnungen oder aus anderen Gründen verursachten Umgebungsveränderungen abgeschwächt werden, wobei dieses Gerät einen Schaltkreis (B) umfasst, der die Modulation der Amplitüde des vom Empfänger (10) aufgefangenen Signals misst, die durch die Bewegung der Körper innerhalb des geschlossenen Raums entsteht, sowie einen Schaltkreis, der in der Lage ist, diese Signalamplitüdenmodulation mit einer vom Benutzer einstellbaren Sollschwelle zu vergleichen und die Auslösung des Alarms zu veranlassen, wenn dieses Signal den Wert dieser Schwelle überschreitet und auch das Resonanzphänomen nicht eintritt, was ein Zeichen für das Vorhandensein einer vorsätzlichen Ursache ist.

2. Alarmgerät laut Ansprch 1), dadurch gekennzeichnet, dass der Verstärker-Schaltkreis (A) des Signals zwecks Dreistufen-Verstärkung drei Schaltkreise (12), (13), (14) umfasst.

3. Alarmgerät laut Anspruch 1), dadurch gekennzeichnet, dass es einen der Amplitüdenmodulation entsprechenden Signalfilter-Schaltkreis (C) für die Eliminierung unnützer Signale wie sehr langsame oder sehr schnelle Änderungen umfasst.

4. Alarmgerät laut Anspruch 1), dadurch gekennzeichnet, dass die Amplitüdenmodulation, die durch die Anwesenheit eines Eindringslings innerhalb des geschützten Bereichs entsteht, einen positiven Impuls hervorruft, der einer durch die entsprechenden Bauteile 15 und 16 voreingestellten Zeit entspricht und der eine Kapazität 17 lädt, die sich in einem entsprechenden Schaltkreis (F) befindet, wobei der Ladewert dieser Kapazität in einem entsprechenden Schaltkreis (G) verglichen wird, der eine feste Sollschwelle beinhaltet, die aus den entsprechenden Bauteilen 18 und 19 besteht und der Alarm ausgelöst wird, falls diese Schwelle nach einer gewissen Anzahl von Impulsen, namentlich drei, überschritten wird.

## Revendications

1. Appareil d'alarme volumétrique à ultra-sons pour la signalisation de la présence d'intrus à l'intérieur d'un espace clos, comprenant une poste émetteur (1) et un poste récepteur (10).
se caractérisant par le fait qu'il comprend un circuit (A) amplificateur du signal capté par le poste récepteur (10), par effet du-dit circuit (A), ce signal est retransmis amplifié par le poste émetteur (11) et, revenant au poste récepteur (10), il est retransmis ultérieurement amplifié et ainsi de suite avec une répétition continue et cyclique des phénomènes, en déterminant - du fait que le signal, en traversant l'espace clos subit différentes atténuations des diverses fréquences composantes par rapport à une fréquence dominante - une résonance de tout le système sur cette fréquence dominante avec sélection automatique eu égard aux fréquences composantes; cette fréquence dominante étant automatiquement remplacée par une autre fréquence au cas où la première, par l'effet de variations environnementales provoquées par des dilatations thermiques ou pour d'autres motifs, s'atténuerait; cet appareil comprenant un circuit (B) qui relève la modulation d'amplitude, du signal capté par le poste (10) récepteur, causée par le mouvement des corps à l'intérieur de l'espace clos et un circuit en mesure de mettre en comparaison cette modulation d'amplitude du signal avec un seuil de référence réglable par l'usager et de déterminer le déclenchement de l'alarme lorsque ce signal dépasse la valeur de ce seuil et aussi lorsqu'il y a absence du phénomène de résonance qui indique la présence d'une cause dolosive.

2. Appareil d'alarme comme à la revendication 1),
se caractérisant par le fait que le circuit (A) amplificateur du signal comprend trois circuits (12), (13), (14), pour l'amplification à travers trois stades.

3. Appareil d'alarme comme à la revendication 1),
se caractérisant par le fait qu'il comprend un circuit (C) de filtrage du signal correspondant à la modulation d'amplitude, pour l'élimination des signaux non utiles, tels les variations très lentes et très rapides.

4. Appareil d'alarme comme à la revendication 1),
se caractérisant par le fait que la modulation d'amplitude provoquée par la présence d'un intrus dans l'air protégé détermine une impulsion positive, égale à un temps pré-réglé par les composants spéciaux 15 et 16, lequel va charger une capacité 17 comprise dans un circuit spécial (F), la valeur de charge de cette capacité étant comparée, dans un circuit spécial (G) comprenant un seuil fixe de référence constitué par des composants spéciaux 18 et 19, l'alarme se déclenchant si après un certain nombre d'impulsions, en l'espèce trois, ce seuil est dépassé.
